# EUROPEAN PATENT SPECIFICATION

(11) **EP 4 360 080 B1**
(45) Date of publication and mention of the grant of the patent: **02.04.2025**
(21) Application number: 22740770.7
(22) Date of filing: 23.06.2022
(51) Int. Cl.: G09B 23/28, A61F 5/443

(54) **A DEMONSTRATION TOOL FOR AN OSTOMY APPLIANCE USER AND A DEMONSTRATION METHOD**
DEMONSTRATIONSWERKZEUG FÜR EINEN STOMAVORRICHTUNGSBENUTZER UND DEMONSTRATIONSVERFAHREN
OUTIL DE DÉMONSTRATION POUR UTILISATEUR D'APPAREIL DE STOMIE ET PROCÉDÉ DE DÉMONSTRATION

(30) Priority: 25.06.2021 DK PA202170331
(43) Date of publication of application: 01.05.2024
(73) Proprietor: Coloplast A/S, 3050 Humlebaek (DK)
(72) Inventor: STROEBECH, Esben, 2970 Hoersholm (DK)
(86) International application number: PCT/DK2022/050138
(87) International publication number: WO 2022/268279

(56) References cited:
- EP-A1- 3 278 773
- EP-A1- 3 609 446
- WO-A1-2006/038025
- WO-A1-2021/037321

## Description

### Background

Stomal output contains body fluids and visceral contents that are aggressive to both the skin of a user and to ostomy appliances. The output can have a detrimental effect on the efficiency and integrity of the adhesive materials that are applied to attach the ostomy appliance to the user's skin surface. For ostomists, safe, reliable, and efficient ostomy appliances are highly desirable. The reliability of the ostomy appliance has been shown to be closely connected the overall quality of life of ostomists. Numerous attempts have been made to improve ostomy appliances, including prolonging their wear time, but the provision of sufficient efficiency to achieve a satisfactory long wear time of ostomy appliances has historically been an unmet need. Further, some attempts have been made to provide solutions which can aid ostomists in obtaining a better fit of the appliance to their individual needs.

CN209312317U discloses a stoma teaching model, including a torso model including different stoma type models and one or more typical ostomist conditions, such as a hernia.

US2014/0052048 discloses an ostomy learning device which includes a body attachment device and an artificial stoma.

DE202011002969U1 discloses another ostomy model for education purposes.

WO 2021/037321 discloses an application aid adapted to assist a user in applying an adhesive base plate of an ostomy appliance to a skin surface around a stoma of the user.

Ostomists and health care professionals alike would welcome improvements in ostomy appliances to provide better fit of the appliances and provide longer wear times of the appliances.

### Summary

The present disclosure provides aspects of a demonstration tool for demonstrating to a user of ostomy appliances an impact of mucin-contamination of a base plate during application of the base plate around the ostomy, the demonstration tool defined according to the appended claims.

### Brief Description of the Drawings

The accompanying drawings are included to provide a further understanding of implementations/embodiments and are incorporated in and constitute a part of this specification. The figures illustrate implementations and together with the description serve to explain principles of implementations. Other implementations and many of the intended advantages of implementations will be readily appreciated as they become better understood by reference to the following detailed description. Like reference numerals designate corresponding similar parts.

Various exemplary implementations and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the implementations. They are not intended as an exhaustive description of the invention or as a limitation on the scope of the invention. In addition, an illustrated implementation needs not have all the aspects or advantages shown. An aspect or an advantage described in conjunction with a particular implementation is not necessarily limited to that implementation and may be practiced in any other implementations even if not so illustrated, or if not so explicitly described.

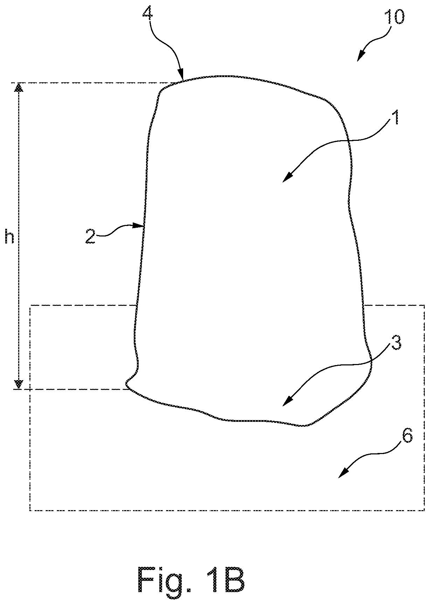

Figure 1B is a schematic, cross-sectional, side view of one embodiment of a generally cylindrical body of an artificial ostomy.
Figure 1A is a schematic, perspective view of one embodiment of a generally cylindrical body of an artificial ostomy.
Figures 2A-C is a series of illustrations demonstrating, in schematic, cross-sectional, side views, the process of applying a base plate around the generally cylindrical body of the artificial ostomy.
Figures 3A-D is a series of illustrations demonstrating, in schematic top and cross-sectional side views, the process of squeezing a drop of liquid between two glass plates, which illustrates the mechanism behind one of the problems that the invention aims to solve.
Figures 4A-C are schematic drawings showing a base plate being applied around a user's stoma S and onto a peristomal skin surface P and being compromised by mucin in the application process.
Figure 5 is a schematic illustration of five different stoma profiles.
Figure 6 is a schematic view of one embodiment of a demonstration tool shown together with a base plate and a collecting bag of an ostomy appliance.
Figures 7A-D is a series of schematic, perspective views illustrating ostomy-receiving openings of different character in a base plate.

### Detailed Description

In the following Detailed Description, reference is made to the accompanying drawings, which form a part hereof, and in which is shown by way of illustration specific implementations/embodiments in which the invention may be practiced. In this regard, directional terminology, such as "top," "bottom," "front," "back," "leading," "trailing," etc., is used with reference to the orientation of the Figure(s) being described. Because components of implementations can be positioned in a number of different orientations, the directional terminology is used for purposes of illustration and is in no way limiting. It is to be understood that other implementations may be utilized, and structural or logical changes may be made without departing from the scope of the present invention. The following detailed description, therefore, is not to be taken in a limiting sense.

It is to be understood that the features of the various exemplary implementations/embodiments described herein may be combined with each other, unless specifically noted otherwise.

Throughout this disclosure, the words "stoma" and "ostomy" are used to denote a surgically created opening bypassing the intestines or urinary tract system of a person. The words may be used interchangeably, and no differentiated meaning is intended. The same applies for any words or phrases derived from these, e.g. "stomal", "ostomies" etc. Also, the solid and liquid wastes emanating from the stoma may be referred to as both stomal "effluents", "output," "waste(s)," "fluids" and other interchangeably. A person or subject having undergone ostomy surgery may be referred to as "ostomist" or "ostomate" - moreover, also as "patient" or "user". However, the phrase "user" can also relate or refer to a health care professional (HCP), such as a surgeon or an ostomy care nurse or others. Addressing 'stoma' herein refers at least to ostomy, ileostomy and urostomy as the problem of contamination of the adhesive surface of a base plate can be caused by stomal effluents in any of these conditions.

In the following, whenever referring to proximal side or surface of a device or part of an appliance (or component), the referral is to the skin-facing side or surface, when the ostomy appliance is worn by a user. Likewise, whenever referring to the distal side or surface of an appliance or part of an appliance, the referral is to the side or surface facing away from the skin, when the ostomy appliance is worn by a user. In other words, the proximal side or surface is the side or surface of something being closest to the user, when the appliance is fitted on a user and the distal side or surface is the opposite side surface - the side or surface of something farthest away from the user in use.

The "axial" direction is defined as the direction of the stoma when the appliance is worn by a user. Thus, the axial direction is generally perpendicular to the stomach skin or abdominal skin surface of the user.

The radial direction is defined as transverse to the axial direction that is transversely to the direction of the stoma. In some sentences, the words "inner" and "outer" may be used. These qualifiers should generally be perceived with reference to the radial direction, such that a reference to an "outer" element means that the element is farther away from a centre portion of a thing, e.g. a base plate for an ostomy appliance than an element referenced as "inner". In addition, "innermost" should be interpreted as the portion of a thing or component forming a centre of the component and/or being adjacent to the centre of the component or alternatively to an inner (e.g. peripheral) edge thereof. In analogy, "outermost" should be interpreted as a portion of a component forming an outer (e.g. peripheral) edge or outer contour of a component and/or being adjacent to that outer edge or outer contour.

In this specification, end means endmost and end portion means that segment that is adjacent to and extends from the end.

The use of phrases such as (but not limited to) "substantially" and "approximately" as qualifiers of certain features or effects in this disclosure, is intended to simply mean that any deviations are within tolerances that would normally be expected by the skilled person in the relevant field.

The use of the word "generally" as a qualifier to certain features or effects in this disclosure is intended to mean - for a structural feature: that a majority or major portion of such feature exhibits the characteristic in question, and - for a functional feature or an effect: that a majority of outcomes involving the characteristic provide the effect, but that exceptionally some outcomes may not provide the effect.

The phrase "adjacent", such as in the wording "adjacent the surface", should be interpreted as being "close to and/or in contact with, or temporarily brought into contact with, but not attached to the surface."

The wording "uptake" and "take up" in relation to a component or effect should be understood in its normal technical sense, i.e., as meaning something which is capable of incorporating and retain something else (another material or matter) in it, mainly by being brought into contact with that other material or matter.

During application of a base plate to the peristomal skin around a stoma, great care must be taken not to contaminate the adhesive material of the base plate with stomal effluents. However, avoiding contamination of the adhesive material of the base plate with stomal effluents has proven very difficult for users. A stoma-receiving opening in the base plate is generally provided at manufacture or cut by the user to fit closely around the stoma thus leaving only little extra room or space around the stoma during application of the base plate. The risk of touching the stoma and/or stomal effluents exuded from the stoma with the edge of the stoma-receiving opening of the base plate, or other portion of the adhesive material during application of a base plate, is therefore significant.

It has been found that even a small amount or droplet of stomal effluent on the adhesive material can quickly spread or disperse to contaminate a substantial area of the adhesive material, a problem often worsened as the base plate is subsequently subjected to finger pressure to adhere the adhesive material against the peristomal skin surrounding the stoma (the adhesive material often being of the pressure-sensitive kind). Moreover, all stomas have individual sizes and very different shapes and contours, also adding to making the task of applying without touching and thus avoiding contamination of the adhesive surface of the base plate difficult to ensure.

A further problem is that it is often hard for a user to see what he or she is doing when applying a base plate to their belly, because the stoma is often located on a lower or downwardly facing portion of the stomach skin, at least when the user is in a standing position.

When a base plate is prepared for application to the peristomal skin surface, the size of the stoma-receiving opening is chosen among standard sizes available from a supplier and then often adjusted by the user to match the size and shape of the individual stoma. The user may for example be instructed to cut the opening into shape such that the adhesive material of the base plate will only adhere to the peristomal skin (and not to the stoma itself) and to provide an approximately 1-3 mm boundary zone (gap) between the cut stoma-receiving opening and the mucous membrane of the stoma.

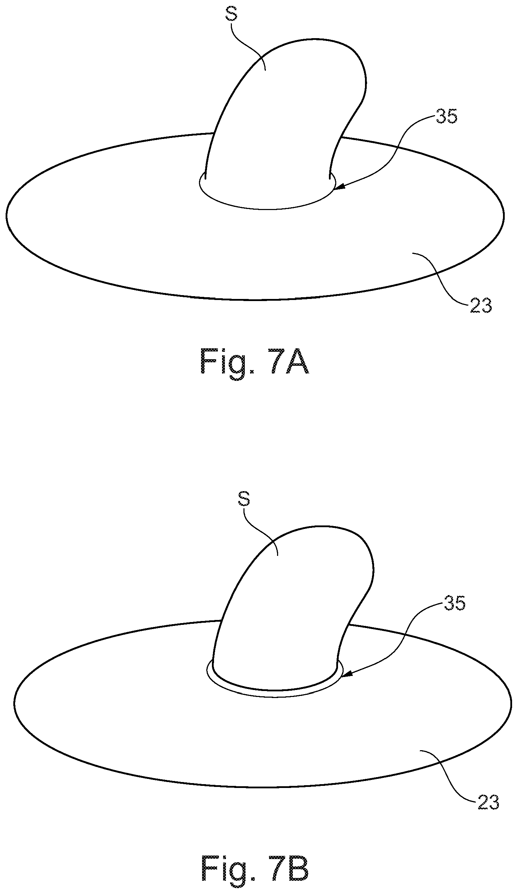

Because the stoma-receiving opening of the base plate is therefore often only slightly larger than the stoma itself, contamination of the adhesive material on the proximal surface of the base plate before bonding to the skin surface is likely happen. Typically, a user is instructed to leave as little room between the stoma and the (customized) stoma-receiving opening to prevent stomal effluents from entering between the adhesive and the skin surface, to avoid damage to the peristomal skin from moisture (skin maceration) and/or aggressive constituents of the stomal effluents, e.g., enzymes produced in the intestines. However, when following that instruction, it is often very difficult to avoid contact between the stoma and/or the peristomal skin surface and the edge of the stoma-receiving opening during application of the base plate (cf. Figures 7A-D).

Experience has shown that when stomal waste and effluents, including urine and/or faeces and other constituents, come into contact with the adhesive material of a base plate, the adhesive properties can decrease temporarily and/or permanently. This will decrease the strength of the adhesive bond between the base plate and the skin and can also lead to creation of chambers or canals in the adhesive material and/or between the adhesive material and the skin. Stomal effluents can thus more easily pass underneath the adhesive in the peristomal area, which can lead to further reduced adhesion.

Even small amounts of stomal effluents on the adhesive material may cause this reduction in tack to occur and pave the way for premature failure of the adhesive material already during application of a fresh base plate. Such failure can lead to leakage, which is regularly cited as the biggest concern for users of ostomy devices.

Avoiding contamination of the adhesive material during application of a base plate is therefore a key problem connected with the application of base plates for ostomy appliances, which the inventors behind the present disclosure therefore set out to solve.

The inventors have observed from tests and studies that contamination of the adhesive material frequently happens because the inner peripheral edge of the stoma-receiving opening of a base plate (which edge is a very short distance from the stoma surface) is highly prone to contact or touch and "scrape off" stomal effluents from the stoma surface when the user shifts or moves the base plate towards the peristomal skin surface for bonding thereto.

Importantly, it has particular surprisingly been observed by the inventors that, in many cases, an almost invisible layer of an aqueous liquid or gel-like substance containing mucin is present on the stoma and/or at the root of the stoma and/or on the peristomal skin surface, even in cases where the stoma and peristomal skin surface have been thoroughly wiped off by the user and both appear "clean". This almost invisible layer can include mucus and mucins coming from the mucous membrane of the stoma and out of the stoma from the intestinal walls. Mucus is a slippery aqueous secretion produced by, and covering, mucous membranes. Mucins are a family of high molecular weight, heavily glycosylated proteins (glycoconjugates) produced by epithelial tissues in most animals, such as in the intestinal walls of humans. The aqueous gel on the surface of the stoma may typically contain mucins in an amount of 1-10 %. The exact composition and amount will vary widely between different ostomists.

Studies conducted by the inventors indicate that upon wiping a stoma surface clean with tissue paper, a layer of a thickness of about 50-100 µm of mucin develops on the stoma surface within just 2 minutes from the wiping. In an attempt to make a scalable understanding of the phenomenon, the inventors have considered a theoretical stoma of Ø30 mm and with a "height" of 30 mm and have calculated a theoretical average production of mucin from the stoma of between 5-30 mL per 24 hours.

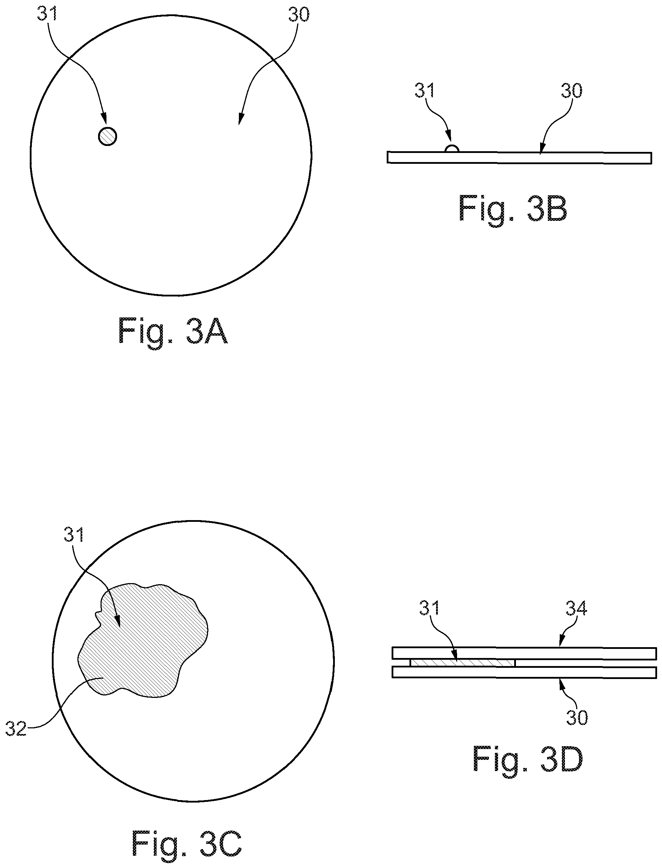

For additional understanding, the issue of contamination of the adhesive material is visualized in Figures 3A-D. In figures 3A (top view) and 3B (side view), a droplet of coloured liquid (illustrating stomal effluent and coloured to enhance visibility) is placed on a glass plate (illustrating the skin of a user). In Figures 3C (top view) and 3D (side view), a second glass plate (illustrating a base plate for an ostomy appliance) is placed over the droplet, and the droplet is thereby squeezed and spread out over a larger area. The contour and extent of the spread-out droplet is drawn up to visualize the area now being contaminated with liquid. As can be seen, the droplet of liquid is now squeezed out to cover a substantial portion of the glass plate. Studies done by the inventors have shown that this same mechanism applies on the adhesive surface of a base plate having been subjected to mucin when it is applied to the peristomal skin surface around a stoma. Even if the mucin is only contaminating a zone near the edge of the stomal opening of the base plate, the example and experience shows that the mucin can quickly spread from the inner zone to a larger surface portion of the base plate's adhesive.

Moreover, it was found by the inventors that when mucin comes into contact with the adhesive material of an ostomy appliance base plate, the adhesive material rapidly loses it adhesive capability and tack. This means that the adhesive cannot properly adhere to the peristomal skin surface in the areas contaminated by mucin. This then in turn means that "canals" or "paths" can be created between the (non-adhered) adhesive material and the peristomal skin surface in the contaminated areas, in which canals or paths of urine or faeces released from the stoma can travel. This in turn provides the possibility for the urine or faeces to harm and/or degrade the adhesive material in or along the canals or paths, thereby leading to further undermining of adhesion and tack, and thus to a vicious circle of adhesive breakdown and risk of adhesive failure and leakage.

In other words, the adhesive material is compromised already from the initial attachment of a fresh base plate, because of the mucin unintentionally coming into contact with the adhesive material during application of the base plate. This is found to result in premature failure of the adhesive with ensuing leakage and reduction of the wear time of the base plate as consequences.

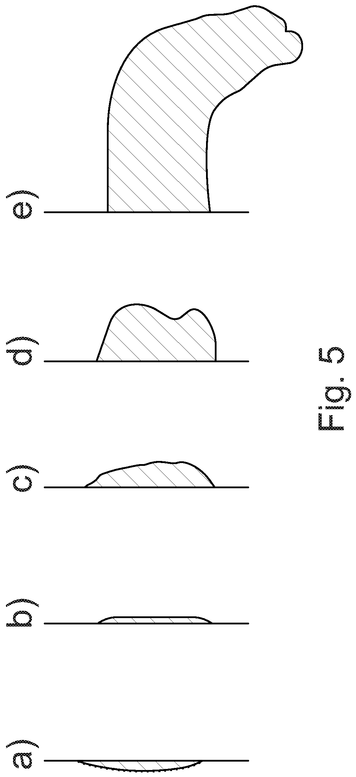

A stoma can be described as a living, mucin-producing (see above) organ. Stomas come in all kinds of different sizes and shapes and can move autonomously (cf. Figure 5). These and other factors make the act of applying a stoma appliance in the best way (i.e., the most appropriate way to ensure a long period of wear) challenging for many users. However, it is believed that at least some of the less-than-optimal examples of applications of base plates of ostomy appliances to peristomal skin (caused by the influence of mucin coming onto the adhesive of the base plate), can be avoided or reduced by providing a demonstration tool allowing for training purposes according to the present disclosure.

By demonstrating and visualizing the consequences of contaminating the adhesive of the base plate with mucin during application of a stoma appliance around an ostomy, it is believed that more users will become aware of and observant to the issue of mucin contamination, which issue has otherwise not been adequately addressed in the ostomy art.

In implementations, the present disclosure relates to a demonstration tool for demonstrating to a user of ostomy appliances an impact of mucin-contamination of a base plate during application of the base plate around the ostomy, the demonstration tool comprising an artificial ostomy comprising a generally cylindrical body having a peripheral surface and a first end surface and a second end surface, wherein a liquid-absorbing material is provided on the peripheral surface of the body.

In this application, the feature "generally cylindrical body" shall be understood as a body of the artificial ostomy having an overall shape resembling a cylinder, for example, but not exclusively, including, a pipe- or conduit-like element. In embodiments, the body can have open or closed end portions, i.e., in the latter case not having character of a pipe or conduit. It should further be understood that the feature "generally cylindrical body" does not exclude that the peripheral surface of the body includes one or more buds or protrusions (seen in cross-section of the body). In other words, the wording "generally cylindrical body" also entails implementations wherein the body and/or the peripheral surface thereof does not have to be perfectly rounded or circular or to have a continuous, unabrupt extent. Particularly, the "generally cylindrical body" can include shapes resembling an oval or ellipse when viewed in cross-section. This is advantageous in order to better demonstrate that real-life stomas rarely have an "ideal" round shape. Research has shown that only about 30% of actual stomas are round or close to round. Many stomas are irregularly shaped. Some irregularities of a stoma may be created during the surgical procedure where the surgeon may have to either "stretch" (or oppositely "fold") the intestinal tissue in one or more places to stitch the stoma tissue on to the skin surface of the stomach of the user.

In implementations, the generally cylindrical body is formed to roughly resemble the shape and size of a real stoma.

In implementations, the liquid-absorbing material is configured to form a gel or sol on the peripheral surface of the body upon contact with liquid. In implementations, the gel is a mucin-resembling gel. A mucin-resembling gel is to be understood as being a gel having a likeliness and comparability to mucin emerging on the mucous membrane of a stoma, at least for the purposes of being suitable for the demonstration tool and method disclosed in this application. It is noted that real mucin may not necessarily be, or behave, as a gel. Adapting the liquid-absorbing material to develop a gel is primarily a matter of ease of handling of the demonstration tool and the method of the disclosure, but also serves to illustrate some of the behavioural characteristics of real mucin as will be understood from this disclosure.

In implementations, the liquid-absorbing material comprises a superabsorber, a water-absorbing mineral, a hydrocolloid and/or a colouring agent. Including a colouring agent will make it easier to see contamination of the proximal surface of the base plate. Additionally, or alternatively, the liquid-absorbing material can be water swellable (e.g., configured to increase significantly in volume when wetted) and/or can comprise hydrophilic substances.

In implementations, the body of the artificial ostomy is formed of or comprises a silicone (or silicone-based) material, polyurethane material, a styrene-isoprene-styrene (SIS) polymer material, or a styrene-ethylene-butylene-styrene (SEBS) material. In implementations, the body is formed of or comprises a mixture of SIS and polyisobutylene (PIB), such as a 50/50 mixture of Kraton 1161 SIS polymer (Kraton) and Oppanol B12 SFN (BASF).

In implementations, the body of the artificial ostomy can comprise an open-celled foam material. In one example, the open-celled foam can be made from a polyether foam material as e.g., known from single-use wash cloths. In such implementations, the liquid-absorbing material can be provided on both the peripheral surface of the body and at least partially inside at least those open cells of the foam surface facing the surroundings. The liquid-absorbing material can be in the form of a powder that is dusted onto (and into the cells) of the body. An adhesive layer or coating can be applied to the surface of the foam to make the powder stick to the body.

In implementations, the artificial ostomy is formed of a tacky material, such as a tacky silicone material or a tacky polyurethane material. It is advantageous to provide the artificial ostomy in a tacky material in order to more easily apply the liquid-absorbing material to the surface(s) of the body of the artificial ostomy.

Generally, it will be understood that on a real-life human ostomy, water and mucin components cover the surface of the ostomy in a more or less continuous layer. In real life, this is a complex biological system functioning to release structural mucin components and diffuse water and other components. One of the hurdles that was identified and overcome by the inventors preparing an artificial ostomy according to the invention is that relevant materials for the body of the artificial ostomy can often be hydrophobic in themselves, meaning that the creation of a hydrophilic (water gel) continuous coating on the surface of the artificial ostomy to resemble the real-life situation is difficult. On a hydrophobic material, a water-based gel will not create a continuous layer on the surface of the artificial ostomy but instead gather in noncontinuous drops of liquid in discrete locations on the surface. To accommodate for this, in embodiments the invention provides the use of a tacky material for the body of the artificial ostomy. Thereby, embodiments provide for e.g., the dusting of a hydrophilic powder material (e.g., CMCs, carboxymethyl celluloses) in a fine layer onto the surface of the (tacky) artificial ostomy. Subjecting the dusted model to a watery liquid causes the CMC particles attached to the sticky model to swell and form a continuous layer of a watery gel on the surface of the artificial ostomy. The continuous layer will be fixated onto the surface due to contributions from both the stickiness of the tacky material and the high viscosity characteristic of the watery gel formed on the surface.

In implementations, the silicone material forming the body is a soft and somewhat shapable (moldable) silicone-based material which is tacky in itself. This can help to provide an artificial ostomy that can be (pre-)shaped to have an irregular shape when the user will use the artificial ostomy for training. The irregular shape can for example be an oval shape or the peripheral surface of the artificial ostomy can include one or more protrusions in one or more directions "radiating" outward from a common centre. In some implementations, the moldable material of the body has a modulus which causes the body to require a smaller force for being stretched than the force required to overcome the adhesion provided by the tacky material (the "adhesion modulus" is larger). Thereby, the adhesion force provided by the material is sufficient to keep an irregular shape of the body of the artificial ostomy deformed or "kept in place" once the body is moulded or deformed to have a particular irregular shape. For example, the artificial ostomy can be stretched or moulded into having a generally oval shape (seen in a cross-sectional plan view of the artificial ostomy) and the adhesion force from the tacky material causes the oval shaped artificial ostomy to stay in that oval configuration. By 'tacky' is meant slightly sticky. In one implementation, the silicone-based material comprises a silicone rubber. In implementations, the silicone rubber is an addition-curing room temperature vulcanization (RTV) silicone rubber, such as a two-part addition curing silicone rubber. As an example, the inventors used WACKER SilGel^{®} 612 A/B as the silicone rubber, for instance in an A/B ratio of 1:0,9 for a very soft product or 1:0,75 for a soft product. These types of silicone-based materials exhibit an inherent tackiness, i.e., they are slightly sticky. Thus, the peripheral surface of the body comprising such silicone-based material is likewise slightly sticky because of the nature of the chosen material itself. The level of tackiness can be increased by adding an adhesive material to the peripheral surface of the body of silicone-based material, e.g., provided as a coating on the peripheral surface. Such implementations will be discussed in more detail below.

In implementations, one or both of the first end surface and the second end surface are tacky. It can be advantageous to have at least one tacky end surface in order to easily attach the artificial ostomy to a surface for demonstration/training purposes.

In implementations, the generally cylindrical body has a height from the first end surface to the second end surface of 10-100 mm. The outer diameter of the body may be in a range of 10-70 mm. Suitably, the body is sized to mimic a real-life stoma and can be customized to look like an individual stoma, if relevant. In implementations, the body has a length in an axial direction between the first and second end surfaces of approximately 60mm. In one implementation, the body has a length in an axial direction of approximately 50mm. In one implementation, the body has a length in an axial direction of approximately 40mm. In one implementation, the body has a length in an axial direction of approximately 30mm. In one implementation, the body has a length in an axial direction of approximately 20mm. As the individual stomas of users are different in length and can even vary in length over time, e.g., in course of the day, the body of the artificial ostomy of the training tool can be configured to resemble different lengths of stomas and thus to accommodate for training for different users having different length of their stomas, including relatively short, protruding stomas and longer (prolapsed) stomas according to the different challenges these variations of stoma length present. In implementations, the artificial ostomy can include means for manually or automatically vary the length of the body of the artificial ostomy.

In implementations, the body comprises an internal passage extending between a first opening in the first end surface and a second opening in the second end surface of the body. The internal passage can be configured to allow flow of a fluid between the first opening in the first end surface and the second opening in the second end surface.

The demonstration/training tool can further optionally comprise a system for advancing fluid through the internal passage, with the system adapted to make the fluid enter the internal passage at the first opening and adapted to make the fluid exit the internal passage at the second opening.

In implementations, the demonstration tool further comprises a base connected to the first end surface of the body. The optional system for advancing fluid can be integrated with the base.

In implementations, the base plate is not an actual base plate for an ostomy device but instead a model or mock-up designed to function like a regular base plate. For instance, the model or mock-up base plate does not necessarily include a collecting bag or coupling means to attach a collecting bag.

When using the demonstration tool according to the disclosure, the user initially prepares the demonstration tool. The demonstration tool can suitably be provided in a protective storage case or packaging when not in use. In implementations, one or both of the first end surface and the second end surface of the generally cylindrical body include(s) an adhesive. The adhesive is suitably a fastening adhesive such that if, for example, the fastening adhesive is provided on the first end surface of the body, the first end surface can be placed on a suitable planar substrate, e.g., a table-top and be fastened thereto by the fastening adhesive. Thereby, the user can place the artificial ostomy in a suitable position for the training exercise and subsequently have both hands free, while being comfortable that the artificial ostomy does not tip over during the demonstration. The adhesive on the end surface can suitably be adapted for temporary fastening of the artificial ostomy to the substrate, i.e., it is not a permanent adhesive fastening. Alternatively, the user can use the adhesive end surface of the body to attach the artificial ostomy to a fingertip, as discussed elsewhere in this disclosure.

It is further understood that in other implementations, the tackiness of the silicone-based material of the body itself is sufficient to make the artificial ostomy be suitably fastened to the substrate. In implementations, wherein both the first end surface and the second end surface of the body comprise adhesive (and/or are tacky in nature), positioning of the body on the substrate can be done without requiring the user to be concerned with a correct orientation of the artificial ostomy.

In implementations, the user prepares a base plate of an ostomy appliance for the demonstration exercise. The base plate can include a backing layer having a distal surface and a proximal surface. An adhesive layer is provided on the proximal surface of the backing layer. Optionally, a protective liner (also called a release liner, typically being formed of a surface-siliconized polymeric sheet material) is provided proximally on the adhesive layer, i.e., provided on the adhesive surface of the base plate.

In some implementations, the base plate can be a mock-up base plate of an ostomy appliance. The mock-up base plate should have the same size and shape and preferably similar "feel" as a genuine/regular base plate but does not necessarily have to include an adhesive layer and/or a protective liner. The mock-up base plate is suitably adapted to illustrate a distribution pattern of mucin-resembling gel on a surface thereof. The mock-up base plate can be configured with or without a protective liner depending on the degree of resemblance with a standard base plate application procedure that is desired. With the mock-up base plate, the same or similar advantages as described above can advantageously be achieved.

In implementations, the mock-up base plate is configured to be a reusable mock-up base plate. The reusable mock-up base plate can suitably be provided in a storage case together with the artificial ostomy. In other implementations, the mock-up base plate is configured to be a single-use mock-up base plate, preferably (but not exclusively) made from one or more recycled and inexpensive materials, for example from production waste materials.

The user should then control if the base plate has an ostomy-receiving opening and if so, whether the diameter of the opening approximates or is slightly greater than a diameter of the artificial ostomy, such as the diameter of the opening being 1-2 mm greater than the diameter of the artificial ostomy. The ostomy-receiving opening should be just large enough to enable the base plate to be applied with a tight and/or snug fit around the artificial ostomy. If the ostomy-receiving opening is not large enough to accommodate the artificial ostomy, the user should adapt the diameter of the ostomy-receiving opening to enable it to do so. In some implementations, the base plate may initially not be provided with an ostomy-receiving opening. In that case, the user should first cut and adapt an ostomy-receiving opening in the base plate in accordance with the above directions.

The user should subject the liquid-absorbing material on the artificial ostomy to a liquid. Subjecting the liquid-absorbing material to liquid causes the liquid-absorbing material on the major peripheral surface of the body to develop a gel, preferably resembling mucin(s) and/or components thereof. In implementations, subjecting the liquid-absorbing material to liquid includes dipping the artificial ostomy into a container with a liquid, such as fresh water, suitably tap water. Other suitable liquids than fresh water can be used provided they do not inhibit the liquid-absorbing material's ability to develop a mucin-resembling gel.

In implementations, the body of the artificial ostomy includes tacky and/or adhesive first and/or second end surface(s). With that configuration, the user can advantageously press the tip of a finger onto the tacky or adhesive end surface of the body to adhere the artificial ostomy to the fingertip. Subsequently, and further advantageously, the user can subject the artificial ostomy sitting on the fingertip to the liquid, e.g., by dipping the artificial ostomy into a container with water.

In some implementations, the artificial ostomy is adhered temporarily onto a substrate by a fastening adhesive provided on one of the end surfaces of the body. In those cases, subjecting the liquid-absorbing material to liquid can include applying the liquid onto the major peripheral surface of the body by applying the liquid thereon with a brush, a pipette or other suitable application means. Other ways of subjecting the liquid-absorbing material to liquid can be used provided they do not prevent the liquid-absorbing material from developing a mucin-resembling gel on the major peripheral surface of the body.

The user can further be provided with the possibility of optionally removing a protective liner optionally provided proximally on the adhesive layer of the base plate. In some implementations, the user can remove the protective liner from the adhesive proximal surface of the base plate. Including removal of the protective liner would correspond to the most common real-life approach of applying a base plate around a stoma of a user, and therefore has the benefit of being familiar to the user comparing the learnings from using the demonstration tool with his or her usual procedure for applying their base plate. In other implementations, the protective liner can be left out of the base plate or, alternatively, the user can choose to refrain from removing the protective liner on the proximal adhesive surface of the base plate before engaging the base plate with the artificial ostomy.

In use, the user should engage the base plate around the artificial ostomy. He or she does so by advancing the base plate in a proximal direction from a second end portion of the body to a first end portion of the body with the body moving through the ostomy-receiving opening of the base plate. This is to be understood such that the artificial ostomy enters through the ostomy-receiving opening from the side of the proximal adhesive surface (or the protective liner) of the base plate, extending through the ostomy-receiving opening and out on the side of the distal surface of the backing layer of the base plate. In other words, the proximal side of the base plate initially faces towards the artificial ostomy at the beginning of the engagement step.

A user can engage the base plate around the artificial ostomy and advance it substantially along an entirety of the length of the body to a "root" of the artificial ostomy at the first end thereof. However, it is also acceptable that the base plate is advanced along only a smaller/shorter portion of the body of the artificial ostomy provided it is enough to ensure that a distribution pattern of the mucin-resembling gel is obtained on the proximal surface or side of the base plate.

After the step of engaging the base plate around the artificial ostomy, the user removes the base plate from the demonstration tool by reversing the engagement step. In other words, the user simply removes again the base plate by advancing off the artificial ostomy in the direction away from the first end surface.

After removing the base plate, the user can inspect the proximal surface of the adhesive or the protective liner to see if any liquid or gel has been deposited. The user can optionally record the results of the inspection step, optionally in a suitable data base. In implementations, the method further comprises a step of analysing the recorded results of the inspection of the distribution pattern of the gel on the proximal surface of the base plate and, optionally, proposing to the user one or more measures for improved application of the base plate based on the analysis. Recording of the results of the inspection can include a manual and/or an electronic/digital recording procedure.

In implementations, the artificial ostomy is reusable. For example, after use, the body of the artificial ostomy can be rinsed in water, optionally dried, and then provided with a fresh layer or coating of absorbent material.

In implementations, the protective liner is suitably adapted to receive a mucin-resembling gel from the body and to facilitate easy identification of a distribution pattern of the gel on the surface of the protective liner. In implementations, the protective liner includes an uptake portion. The uptake portion can be adapted for taking up the gel and/or for facilitating easy identification of a distribution pattern of the gel on the surface of the protective liner.

In implementations, the uptake portion comprises an absorbent material. The absorbent material may be provided on the proximal surface of the removable protection element. In implementations, the proximal surface comprises an adhesive coating or lining suitable for receiving and retaining such absorbent powder(s). In implementations, the uptake portion is provided by lining, layering, spraying, or dusting an uptake capacity material onto a substrate of the removable protection element.

In implementations, suitable absorbent materials for an uptake portion include one or more of polymeric sheet material, a net (e.g. a polymeric net), a polymeric non-woven, a fabric, a pulp, a paper, a tissue, a textile, an open-celled memory foam, a Coloplast^{®} BIATAIN^{®} foam material (a hydrophilic, polyurethane open-celled foam material) or an integral foam material (also known as self-skin foam, a type of foam with a high-density skin and a low-density core). In implementations, the uptake portion comprises an integral foam material and a surfactant. In implementations, the uptake portion comprises a material made from a paper pulp. In implementations, the uptake portion comprises a material made from a cellulose-based pulp.

Alternatively, or additionally, the uptake portion comprises one or more materials selected from hydrocolloids (such as, but not limited to, carboxymethylcellulose (CMC) and potato starches), superabsorbent, minerals, gels, and sols.

In implementations, the uptake portion comprises a combination, such as provided as a composite material, of, a structural component such as one or more of polymeric sheet material, a net (e.g. a polymeric net), a polymeric non-woven, a fabric, a pulp, a paper, a tissue, a textile, an open-celled memory foam, a Coloplast^{®} BIATAIN^{®} foam material or an integral foam material with one or more of a particulate or additive component such as hydrocolloids, superabsorbents, minerals, gels and sols. Providing an uptake portion as a combination or composite including one or more of the structural components and one or more of the particulate or additive components can increase the uptake capacity of the uptake portion and/or help provide different/various bases for analyses.

In implementations, the uptake portion comprises a material dusted onto the proximal surface of the removable protection element. In implementations, the removable protection element includes a substrate, such as a liner, sheet, film, sheet-like or film-like material made from polymeric material as discussed above, on a surface of which, a thin layer of adhesive material is applied, e.g., sprayed onto, and with a layer of hydrocolloids or other absorbents dusted onto the adhesive layer. Dusting absorbent material onto a surface of a substrate to create an uptake portion is an advantageous manner of providing a thin, non-bulky uptake portion.

In implementations, wherein the protective liner remains on the proximal adhesive surface of the base plate during engagement around the artificial ostomy, the demonstration tool and method disclosed herein can be used without soiling or contaminating the adhesive material of the base plate. Thus, the base plate can subsequently or later be used for actual wear around the user's ostomy and hence this approach does not entail unnecessary spending of the user's products.

### Description of the drawings

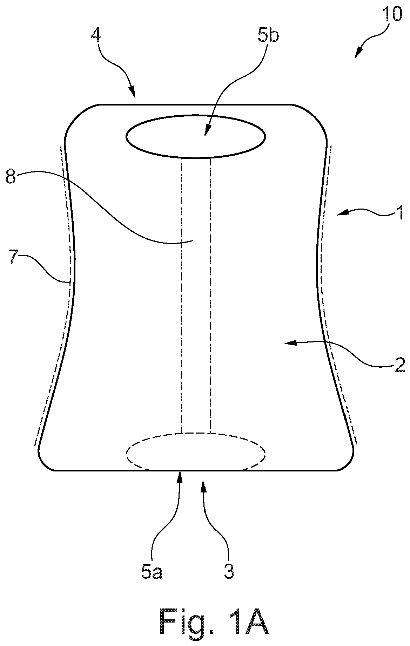

Figure 1A is a schematic, cross-sectional, side view of a generally cylindrical body (1) of one embodiment of an artificial ostomy of a demonstration tool (10) for demonstrating to a user of ostomy appliances an impact of mucin-contamination of a base plate during application of the base plate around the ostomy. The generally cylindrical body (1) is shown with a peripheral surface (2), a first end surface (3) and a second end surface (4). In the embodiment of Figure 1A, the generally cylindrical body has a second opening (5b) in the second end surface (4). The body (1) can also include a first opening (5a) in the first end surface (3), indicated by broken line in Figure 1A. In embodiments, the body (1) includes an internal passage (8) extending inside the body (1) between the first opening (5a) and the second opening (5b). A liquid-absorbing material (7) is illustrated to be provided on the peripheral surface (2) of the body (1). In the embodiment of Figure 1A, the liquid-absorbing material (7) is configured to form a gel or sol on the peripheral surface (2) of the body (1) upon contact with liquid, which gel or sol resembles mucin, i.e., having a likeliness and comparability to real mucin emerging on the mucous membrane of a real stoma. In embodiments, the demonstration/training tool (10) can further include a system for advancing fluid through the internal passage (8), with the system adapted to make the fluid enter the internal passage (8) at the first opening (5a) and adapted to make the fluid exit the internal passage (8) at the second opening (5b). This can assist in illustrating exudates coming from a real stoma for the training purposes. A system for advancing fluid is not shown in Figure 1A, but is should be understood that the system can be integrated inside the body (1) of the artificial ostomy and/or with a base (see Figure 1B).

As described above, the term "generally cylindrical body" shall be understood as a body having an overall shape resembling a cylinder. It should further be understood that the feature "generally cylindrical body" does not exclude that the peripheral surface of the body includes one or more buds or protrusions (seen in cross-section of the body). Figure 1B is a schematic, perspective illustration of a generally cylindrical body (1) of one embodiment of an artificial ostomy. In Figure 1B, the body (1) is formed to roughly resemble the shape and size of a real stoma. Figure 1B illustrates one embodiment wherein the body (1) of the artificial ostomy is made from a dark-coloured silicone material. The body (1) of the artificial ostomy is located on a base (6). In the exemplary embodiment of Figure 1B, the base (6) is made from a light-coloured silicone material. The body (1) of the artificial ostomy can be permanently or detachably attached to the base (6). As can be understood from Figure 1B, the "generally cylindrical body" (1) of the artificial ostomy includes embodiments wherein the body (1) is not perfectly rounded or circular, as is best illustrated at the "root" of the body (1) where the first end surface (3) engages with the base (6) and the body (1) has some peripheral surface irregularities. Thus, Figure 1B also illustrates the cases wherein a stoma was created with irregularities during the surgical procedure, because the surgeon had to manipulate the tissue of the intestine to be able to stitch it on to the skin surface of the stomach of the user (skin surface illustrated by the base (6)).

In the embodiment of Figure 1B, at least the first end surface (3) is tacky whereby the body (1) of the artificial ostomy can conveniently and/or easily be attached to the base (6) for demonstration/training purposes by adhesion. As can be understood from Figure 1B, in embodiments the demonstration tool (10) further includes the base (6). In the embodiment of Figure 1B, the base (6) is connected to the body (1) at the first end surface (3). An optional system for advancing fluid through the internal passage (Figure 1A), as described above, can also be integrated in the base (6), but is not shown in Figure 1B.

The peripheral surface (2) of the body (1) as illustrated by the embodiment of Figure 1B can also comprise a material which in itself is tacky (or made sticky) to provide the liquid-absorbing material on the body (1), the liquid-absorbing material (7) not shown in Fig. 1B.

In embodiments, the body (1) has a height "h" from the first end surface (3) to the second end surface (4) of 10-100 mm. In the example illustrated in Figure 1B, the height "h" of the body (1) is approximately 30mm (figures not to scale).

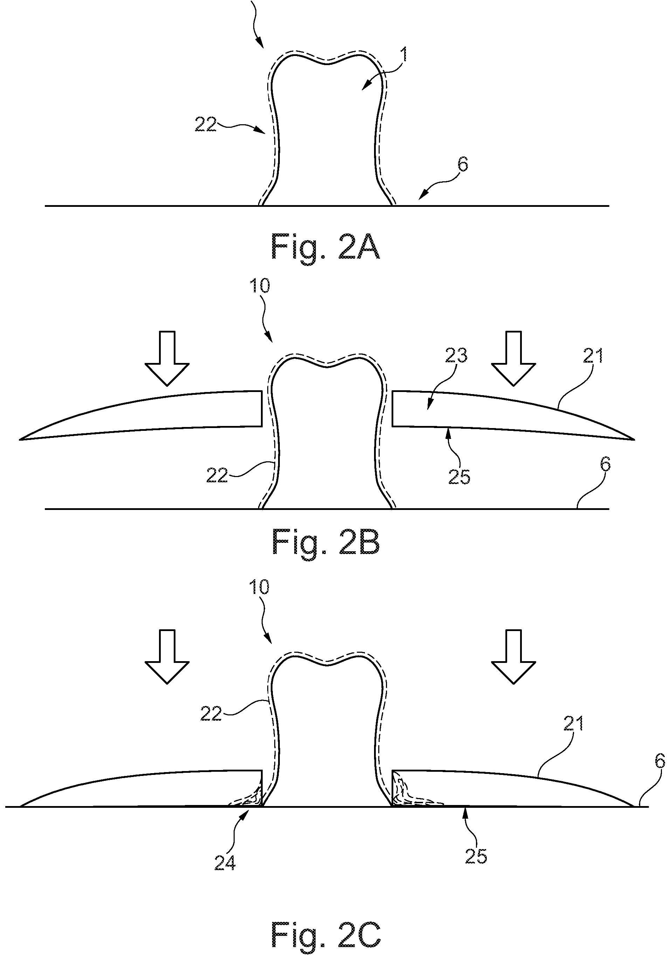

Figures 2Aα-C is a series of three illustrations demonstrating, in schematic, cross-sectional, side views, at least some of the steps of a method for demonstrating to a user of an ostomy appliance the impact of stomal mucin-contamination of a base plate (23) including applying a base plate (23) around the generally cylindrical body (1) of one embodiment of the artificial ostomy of the demonstration tool (10). In embodiments, the user prepares a base plate (23) of an ostomy appliance for the demonstration exercise. In embodiments, the base plate (23) includes a backing layer (21) having a distal surface and a proximal surface. An adhesive layer is provided on the proximal surface of the backing layer and provides a proximal surface (25) of the base plate (23). Optionally, a protective liner is provided on and protects the adhesive surface (25) of the base plate (23) (not shown). In embodiments, the protective liner includes a liquid-absorbing material.

Figure 2A shows the generally cylindrical body (1) and a base (6) on which the generally cylindrical body (1) is mounted. A layer resembling a mucin-like gel (22) is illustrated on the surface of the body (1). The layer resembling the mucin-like gel (22) is created by subjecting the liquid-absorbing material (7) shown in Figure 1A to liquid or moisture. In embodiments, subjecting the liquid-absorbing material to liquid includes dipping the body (1) of the artificial ostomy into a container with liquid (not shown). In embodiments, the user can advantageously subject the artificial ostomy to the liquid in the container with the body (1) "sitting" on the outer portion of the user's finger due to adhesion to the tacky first end surface (3) of the body (1) (Figure 1A). In Figure 2B is seen a base plate (23) being applied in the direction of the arrows over the body (1). In Figure 2C the base plate has been applied all the way to the base (6) and the base plate is illustrated as having been compromised with a contamination (24) of the mucin-like gel (22), particularly at a part of the base plate (23) close to the artificial ostomy. Thus, in a demonstration/training set-up, the user engages the base plate (23) around the body (1) of the artificial ostomy and advances it substantially along an entirety of the length of the body (1) to a "root" of the artificial ostomy at the first end thereof (Figure 2C).

After removing the base plate (23) again, the user inspects the proximal surface (25) of the adhesive or of a protective liner on the base plate (not shown) to see if any liquid or mucin-resembling gel has been deposited on the adhesive. In more detail, the user inspects a distribution pattern of the gel on the proximal surface (25) of the adhesive base plate (23). The results of the inspection step are then recorded in a suitable data base. In embodiments, the method further comprises a step of analysing the recorded results of the inspection of the distribution pattern of the gel on the proximal surface (25) of the base plate (23) and, optionally, proposing to the user one or more measures for improved application of a base plate based on the analysis.

Figures 3A-D is a series of illustrations demonstrating, in schematic top and cross-sectional side views, a process of squeezing a drop of liquid (31) between two glass plates (30, 34), which is intended to illustrate the mechanism behind one of the problems that the invention aims to solve. In figures 3A (top view) and 3B (cross-sectional side view), a droplet of coloured liquid (31), resembling a droplet of mucin and coloured to enhance visibility, is placed on a glass plate (30) illustrating the human skin. In Figures 3C (top view) and 3D (cross-sectional side view), a second glass plate (34), illustrating a base plate of an ostomy appliance, is placed over the droplet (31), and the droplet (31) is thereby squeezed between the glass plates (30, 34) and spread out over a larger area. The contour and extent of the spread-out droplet (31) is drawn up in Figure 3D to visualize an area now being contaminated with liquid. As can be seen, the droplet (31) of liquid has now been squeezed and thus covers a substantial portion of the glass plate (30). It is believed that this same mechanism applies on the adhesive surface of a base plate having been subjected to mucin from the stoma surface when the base plate is being applied to the peristomal skin surface around the stoma (due to contacting or even scraping off mucin during the passage of the stoma through the stoma-receiving opening of the base plate). In Figures 3C and 3D, the spread-out droplet (31) is illustrated in a shaded manner to illustrate embodiments wherein the liquid-absorbing material (7) includes a colouring agent (32) to make it easier to see the mucin-resembling contamination on the glass plates (30, 34) or on proximal surface of a base plate (32) (Figures 2A-C).

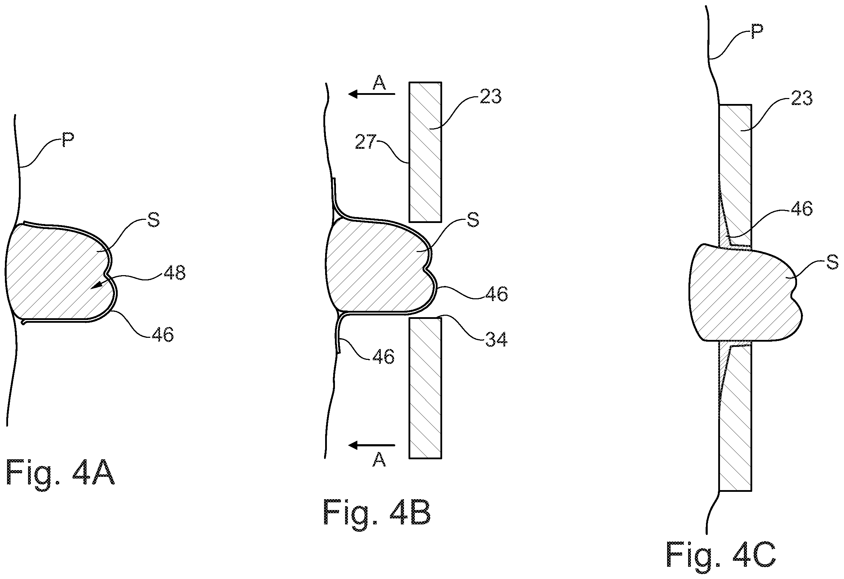

For comparison of the demonstration tool and method described above with the process of applying a base plate around a real stoma, Figure 4A is a schematic drawing showing a user's stoma S and peristomal skin surface P and with an indication in dark colour of mucin being formed on the surface 48 of the stoma S.

Figure 4B is a schematic drawing showing a base plate (23) being guided in the direction of the arrows A to a desired position adjacent the peristomal skin surface P with the user's stoma S engaging a stoma-receiving opening (35) in the base plate (23) and with an indication in dark colour of mucin (46) being formed on the surface (48) of the stoma S and also have begun seeping onto the peristomal skin surface P. In some embodiments, the proximal surface of the base plate (23) includes an uptake portion (27) capable of absorbing liquid or moisture.

Figure 4C is a schematic drawing showing the base plate in a desired position adjacent the peristomal skin surface P with the user's stoma S engaging the stoma-receiving opening (35). Mucin, on the peristomal skin surface P, and in some cases also from the stoma surface (48), is shown to compromise the base plate (23).

In some embodiments of the claimed method, the base plate (23) is not an actual base plate for an ostomy device but instead a model or mock-up designed to function like a regular base plate. For example, the model or mock-up base plate does not include a collecting bag or coupling means to attach a collecting bag of an ostomy appliance. The mock-up base plate may have the same size and shape and preferably similar "feel" as a genuine/regular base plate but does not necessarily have to include an adhesive layer and/or a protective liner. The mock-up base plate is suitably adapted to illustrate a distribution pattern of mucin-resembling gel on a surface thereof. The mock-up base plate can be configured with or without a protective liner depending on the degree of resemblance with a standard base plate application procedure that is desired in the demonstration method.

Figure 5 is a schematic illustration of five different stoma profiles that are representative, but not exhaustive, for a stoma population. Stoma a) is identified as a retracted stoma; stoma b) as a flush stoma; c) as a low-profile stoma; d) as a protruding stoma and e) as a prolapsing stoma. The demonstration/training tool (10) and the method according to the disclosure can include any one of the shown stoma profiles and achieve the advantageous purpose of demonstrating to a user of ostomy appliances an impact of mucin-contamination of a base plate during application of the base plate around the ostomy.

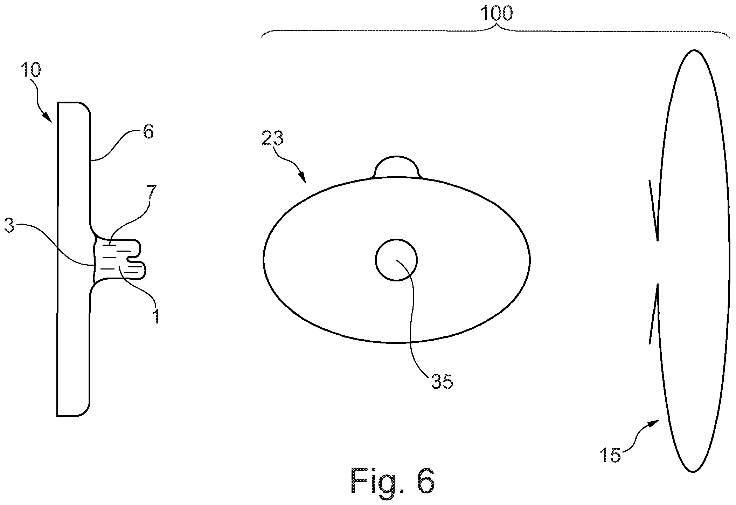

Figure 6 is a schematic view of an ostomy appliance (100) including a base plate (23) and a collecting bag (15) adapted to engage with the base plate (23) and further illustrating one embodiment of the demonstration tool (10) of the present disclosure which can advantageously by used together with the ostomy appliance (100) for demonstration purposes. Figure 6 schematically illustrates one embodiment of the demonstration tool (10) of the disclosure including an artificial ostomy with a body (1) provided with a liquid-absorbing material (7) on a peripheral surface of the body (1). In Figure 6, the body (1) is shown to be adhesively attached to a base (6) of the demonstration tool (10) at a first end surface (3) of the body (1).

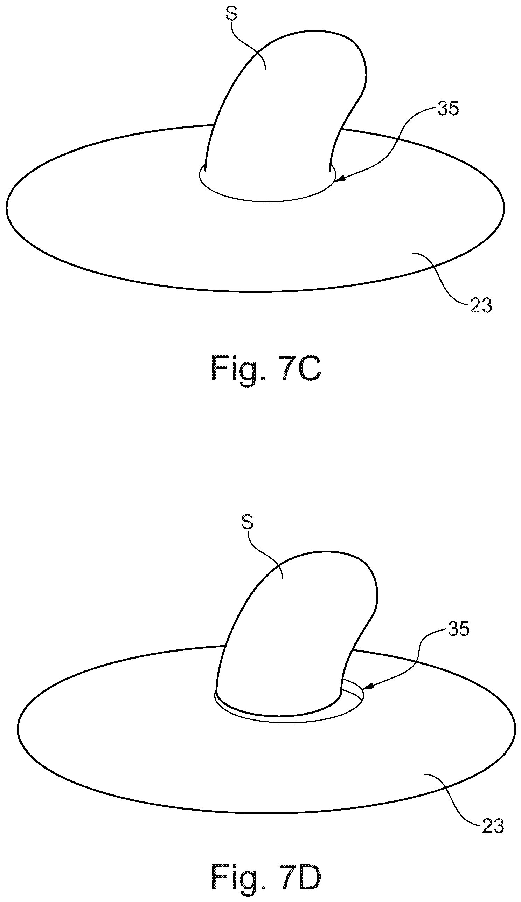

Figures 7A-D is a series of schematic, perspective views illustrating ostomy-receiving openings of different character in a base plate. In Fig. 7A the ostomy-receiving opening (35) has been cut in the base plate (23) in a manner that has created a near-to-perfect fit around the stoma S. This situation is very difficult to consistently reach. In Fig. 7B the ostomy-receiving opening (35) has been cut in the base plate (23) in a manner that has created a too-large opening around the stoma S. This situation is not desirable as it allows for stomal effluents to easily exude from the stomal opening, down to the root of the stoma, through the ostomy-receiving opening (34) and therefrom capable of compromising and destroying the adhesive capability of the base plate (23). In Fig. 7C the ostomy-receiving opening (35) has been cut in the base plate (23) in a manner that has created a too-tight fit around the stoma S. It is undesirable for the base plate (23) to be in constant engagement with the stoma S, as this can cause various problems, including trauma and bleeding. In Fig. 7D the ostomy-receiving opening (35) has been cut in the base plate (23) in a manner that has created an imperfect fit that is "off-centre", meaning that the ostomy-receiving opening (35) sits around the stoma S, such that it is way off from the stoma in one section and in contact with the stoma in another section.

Although specific implementations/embodiments have been illustrated and described herein, it will be appreciated by those of ordinary skill in the art that a variety of alternate and/or equivalent implementations may be substituted for the specific implementations shown and described without departing from the scope of the present invention. This application is intended to cover any adaptations or variations of body side members for ostomy appliances as discussed herein. Therefore, it is intended that this invention be limited only by the claims and the equivalents thereof.

Although particular features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A demonstration tool (10) for demonstrating to a user of ostomy appliances an
impact of mucin-contamination of a base plate (23) during application of the base
plate around the ostomy, the demonstration tool comprising:
an artificial ostomy comprising a generally cylindrical body (1) having an outer peripheral surface (2) and a first end surface (3) and a second end surface (4), wherein a liquid-absorbing material (7) is provided on the outer peripheral surface (2) of the body (1).

2. The demonstration tool of claim 1, wherein the liquid-absorbing material (7) is configured to form a gel (22) on the outer peripheral surface (2) of the body upon contact with liquid.

3. The demonstration tool of any preceding claim, wherein the liquid-absorbing material (7) comprises a hydrocolloid.

4. The demonstration tool of any preceding claim, wherein the liquid-absorbing material (7) comprises a colouring agent (32).

5. The demonstration tool of any preceding claim, wherein the artificial ostomy is formed of a silicone material or a polyurethane material.

6. The demonstration tool of claim 5, wherein the silicone material comprises an addition-curing two-part silicone rubber.

7. The demonstration tool of any preceding claim, wherein the outer peripheral surface (2) of the body (1) is tacky.

8. The demonstration tool of any preceding claim, wherein one or both of the first end surface (3) and the second end surface (4) are tacky.

9. The demonstration tool of any preceding claim, wherein the generally cylindrical body (1) has a height from the first end surface (3) to the second end surface (4) of 10-100 mm.

10. The demonstration tool of any preceding claim, wherein an outer diameter of the generally cylindrical body (1) is in a range of 10-70 mm.

11. The demonstration tool of any preceding claim, wherein the body (1) comprises an internal passage (8) extending between a first opening (5a) in the first end surface (3) and a second opening (5b) in the second end surface (4) of the body (1).

12. The demonstration tool of claim 11, wherein the internal passage (8) is configured to allow flow of a fluid between the first opening (5a) in the first end surface (3) and the second opening (5b) in the second end surface (4).

13. The demonstration tool of any one of claims 11 or 12, further comprising a system for advancing fluid through the internal passage, the system adapted to make the fluid enter the internal passage (8) at the first opening (5a) and adapted to make the fluid exit the internal passage at the second opening (5b).

14. The demonstration tool of any preceding claim, further comprising a base (6) connected to the first end surface (3) of the body (1).

15. The demonstration tool of claim 14, when dependent on claim 13, wherein the system for advancing fluid is integrated with the base (6).

16. The demonstration tool of any preceding claim, wherein the base plate (23) is a mock-up base plate of an ostomy appliance.

17. A method for demonstrating to a user of an ostomy appliance an impact of stomal mucin-contamination of a base plate (23), the method comprising the steps of:
a. providing a demonstration tool (10) according to any one of the preceding claims;
b. providing a base plate (23), the base plate comprising a backing layer (21) having a distal surface and a proximal surface and an adhesive layer provided on the proximal surface of the backing layer (21);
c. controlling if an ostomy-receiving opening of the base plate (23) has a diameter approximating or slightly greater than a diameter of the artificial ostomy to enable the base plate to be applied around the artificial ostomy, and, if not, adapting the diameter of the ostomy-receiving opening to enable it to be applied around the artificial ostomy;
d. applying liquid to the liquid-absorbing material (7) to form a gel (22) on the outer peripheral surface (2) of the generally cylindrical body (1);
e. engaging the base plate (23) around the artificial ostomy by advancing the base plate in a proximal direction from a second end portion of the generally cylindrical body (1) to a first end portion of the body (1) with the body moving through the ostomy-receiving opening of the base plate (23);
f. removing the base plate (23) from the demonstration tool (10) by reversing the engagement step;
g. inspecting a distribution pattern of gel on a proximal surface (25) of the base plate (23).

18. The method of claim 17, wherein the base plate comprises a protective liner on a proximal surface of the adhesive layer.

19. The method of claim 18, wherein a proximal surface of the protective liner comprises an absorbent material.

20. The method of any one of claims 17-19, wherein the results of the inspection step are recorded in a database.

21. The method of claim 20, wherein the recording of the results in the database is performed manually or digitally.

22. The method of any one of claims 20 or 21, further comprising a step of analysing the recorded results of the inspection of the distribution pattern of the gel on the proximal surface of the base plate.

23. The method of claim 22, further comprising proposing to the user one or more measures for improved application of the base plate based on the analysis.

24. The method of claim 23, wherein the step of proposing one or more measures includes generation of the measure proposals using machine learning.

## Patentansprüche

1. Demonstrationswerkzeug (10) zum Demonstrieren einer Auswirkung von Mucin-Kontamination einer Basisplatte (23) während des Anbringens der Basisplatte um das Stoma herum für einen Benutzer von Stomavorrichtungen, wobei das Demonstrationswerkzeug Folgendes umfasst:
ein künstliches Stoma, das einen im Allgemeinen zylindrischen Körper (1) mit einer äußeren Umfangsfläche (2) und einer ersten Endfläche (3) und einer zweiten Endfläche (4) umfasst, wobei ein flüssigkeitsabsorbierendes Material (7) auf der äußeren Umfangsfläche (2) des Körpers (1) vorgesehen ist.

2. Demonstrationswerkzeug nach Anspruch 1, wobei das flüssigkeitsabsorbierende Material (7) dazu ausgelegt ist, bei Kontakt mit Flüssigkeit ein Gel (22) auf der äußeren Umfangsfläche (2) des Körpers zu bilden.

3. Demonstrationswerkzeug nach einem der vorhergehenden Ansprüche, wobei das flüssigkeitsabsorbierende Material (7) ein Hydrokolloid umfasst.

4. Demonstrationswerkzeug nach einem der vorhergehenden Ansprüche, wobei das flüssigkeitsabsorbierende Material (7) ein Färbemittel (32) umfasst.

5. Demonstrationswerkzeug nach einem der vorhergehenden Ansprüche, wobei das künstliche Stoma aus einem Silikonmaterial oder einem Polyurethanmaterial gebildet ist.

6. Demonstrationswerkzeug nach Anspruch 5, wobei das Silikonmaterial einen additionsvernetzenden Zweikomponenten-Silikonkautschuk umfasst.

7. Demonstrationswerkzeug nach einem der vorhergehenden Ansprüche, wobei die äußere Umfangsfläche (2) des Körpers (1) klebrig ist.

8. Demonstrationswerkzeug nach einem der vorhergehenden Ansprüche, wobei eine oder beide der ersten Endfläche (3) und der zweiten Endfläche (4) klebrig sind.

9. Demonstrationswerkzeug nach einem der vorhergehenden Ansprüche, wobei der im Allgemeinen zylindrische Körper (1) eine Höhe von der ersten Endfläche (3) zur zweiten Endfläche (4) von 10-100 mm aufweist.

10. Demonstrationswerkzeug nach einem der vorhergehenden Ansprüche, wobei ein Außendurchmesser des im Allgemeinen zylindrischen Körpers (1) in einem Bereich von 10-70 mm liegt.

11. Demonstrationswerkzeug nach einem der vorhergehenden Ansprüche, wobei der Körper (1) einen inneren Durchgang (8) umfasst, der sich zwischen einer ersten Öffnung (5a) in der ersten Endfläche (3) und einer zweiten Öffnung (5b) in der zweiten Endfläche (4) des Körpers (1) erstreckt.

12. Demonstrationswerkzeug nach Anspruch 11, wobei der innere Durchgang (8) dazu ausgelegt ist, einen Flüssigkeitsfluss zwischen der ersten Öffnung (5a) in der ersten Endfläche (3) und der zweiten Öffnung (5b) in der zweiten Endfläche (4) zu ermöglichen.

13. Demonstrationswerkzeug nach einem der Ansprüche 11 oder 12, ferner umfassend ein System zum Vorwärtsbewegen von Flüssigkeit durch den inneren Durchgang, wobei das System dazu eingerichtet ist, die Flüssigkeit an der ersten Öffnung (5a) in den inneren Durchgang (8) eintreten zu lassen und die Flüssigkeit an der zweiten Öffnung (5b) aus dem inneren Durchgang austreten zu lassen.

14. Demonstrationswerkzeug nach einem der vorhergehenden Ansprüche, ferner umfassend eine Basis (6), die mit der ersten Endfläche (3) des Körpers (1) verbunden ist.

15. Demonstrationswerkzeug nach Anspruch 14, wenn abhängig von Anspruch 13, wobei das System zum Vorwärtsbewegen von Flüssigkeit in die Basis (6) integriert ist.

16. Demonstrationswerkzeug nach einem der vorhergehenden Ansprüche, wobei die Basisplatte (23) eine Nachbildung einer Basisplatte einer Stomavorrichtung ist.

17. Verfahren zum Demonstrieren einer Auswirkung einer Stomakontamination einer Basislatte (23) durch Stomamucin für einen Benutzer einer Stomavorrichtung, wobei das Verfahren die folgenden Schritte umfasst:
a. Bereitstellen eines Demonstrationswerkzeugs (10) nach einem der vorhergehenden Ansprüche;
b. Bereitstellen einer Basisplatte (23), wobei die Basisplatte eine Trägerschicht (21) mit einer distalen Oberfläche und einer proximalen Oberfläche und eine auf der proximalen Oberfläche der Trägerschicht (21) vorgesehene Klebeschicht umfasst;
c. Kontrollieren, ob eine Stomaaufnahmeöffnung der Basisplatte (23) einen Durchmesser aufweist, der annähernd oder etwas größer als ein Durchmesser des künstlichen Stomas ist, um das Anbringen der Basisplatte um das künstliche Stoma herum zu ermöglichen, und falls nicht, Anpassen des Durchmessers der Stomaaufnahmeöffnung, um deren Anbringen um das künstliche Stoma herum zu ermöglichen;
d. Aufbringen von Flüssigkeit auf das flüssigkeitsabsorbierende Material (7), um ein Gel (22) auf der äußeren Umfangsfläche (2) des im Allgemeinen zylindrischen Körpers (1) zu bilden;
e. Anbringen der Basisplatte (23) um das künstliche Stoma herum durch Vorwärtsbewegen der Basisplatte in proximaler Richtung von einem zweiten Endabschnitt des im Allgemeinen zylindrischen Körpers (1) zu einem ersten Endabschnitt des Körpers (1), wobei sich der Körper durch die Stomaaufnahmeöffnung der Basisplatte (23) bewegt;
f. Entfernen der Basisplatte (23) vom Demonstrationswerkzeug (10) durch Umkehren des Anbringungsschritts;
g. Inspizieren eines Verteilungsmusters von Gel auf einer proximalen Oberfläche (25) der Basisplatte (23).

18. Verfahren nach Anspruch 17, wobei die Basisplatte eine Schutzfolie auf einer proximalen Oberfläche der Klebeschicht umfasst.

19. Verfahren nach Anspruch 18, wobei eine proximale Oberfläche der Schutzfolie ein absorbierendes Material umfasst.

20. Verfahren nach einem der Ansprüche 17-19, wobei die Ergebnisse des Inspektionsschritts in einer Datenbank aufgezeichnet werden.

21. Verfahren nach Anspruch 20, wobei die Aufzeichnung der Ergebnisse in der Datenbank manuell oder digital erfolgt.

22. Verfahren nach einem der Ansprüche 20 oder 21, ferner umfassend einen Schritt des Analysierens der aufgezeichneten Ergebnisse der Inspektion des Verteilungsmusters des Gels auf der proximalen Oberfläche der Basisplatte.

23. Verfahren nach Anspruch 22, ferner umfassend das Vorschlagen einer oder mehrerer Maßnahmen für eine verbesserte Anbringung der Basisplatte für den Benutzer basierend auf der Analyse.

24. Verfahren nach Anspruch 23, wobei der Schritt des Vorschlagens einer oder mehrerer Maßnahmen die Generierung der Maßnahmenvorschläge unter Verwendung von maschinellem Lernen umfasst.

## Revendications

1. Outil de démonstration (10) pour démontrer à un utilisateur d'appareillages pour stomie l'effet d'une contamination par la mucine d'une plaque de base (23) au cours de l'application de la plaque de base autour de la stomie, l'outil de démonstration comprenant :
une stomie artificielle comprenant un corps généralement cylindrique (1) pourvu d'une surface périphérique extérieure (2) et d'une première surface d'extrémité (3) et d'une deuxième surface d'extrémité (4), un matériau (7) absorbant les liquides étant placé sur la surface périphérique extérieure (2) du corps (1).

2. Outil de démonstration selon la revendication 1, le matériau (7) absorbant les liquides étant configuré pour former un gel (22) sur la surface périphérique extérieure (2) du corps en cas de contact avec un liquide.

3. Outil de démonstration selon l'une quelconque des revendications précédentes, le matériau (7) absorbant les liquides comprenant un hydrocolloïde.

4. Outil de démonstration selon l'une quelconque des revendications précédentes, le matériau (7) absorbant les liquides comprenant un colorant (32).

5. Outil de démonstration selon l'une quelconque des revendications précédentes, la stomie artificielle étant formée d'un matériau silicone ou d'un matériau polyuréthane.

6. Outil de démonstration selon la revendication 5, le matériau silicone comprenant un caoutchouc silicone bicomposant réticulable par addition.

7. Outil de démonstration selon l'une quelconque des revendications précédentes, la surface périphérique extérieure (2) du corps (1) étant gluante.

8. Outil de démonstration selon l'une quelconque des revendications précédentes, la première surface d'extrémité (3) et/ou la deuxième surface d'extrémité (4) étant gluantes.

9. Outil de démonstration selon l'une quelconque des revendications précédentes, le corps généralement cylindrique (1) étant pourvu d'une hauteur de la première surface d'extrémité (3) à la deuxième surface d'extrémité (4) comprise entre 10 et 100 mm.

10. Outil de démonstration selon l'une quelconque des revendications précédentes, un diamètre extérieur du corps généralement cylindrique (1) étant compris entre 10 et 70 mm.

11. Outil de démonstration selon l'une quelconque des revendications précédentes, le corps (1) comprenant un passage interne (8) s'étendant entre une première ouverture (5a) dans la première surface d'extrémité (3) et une deuxième ouverture (5b) dans la deuxième surface d'extrémité (4) du corps (1).

12. Outil de démonstration selon la revendication 11, le passage interne (8) étant configuré pour permettre l'écoulement d'un fluide entre la première ouverture (5a) dans la première surface d'extrémité (3) et la deuxième ouverture (5b) dans la deuxième surface d'extrémité (4).

13. Outil de démonstration selon l'une quelconque des revendications 11 ou 12, comprenant en outre un système pour faire progresser le fluide à travers le passage interne, le système étant adapté à faire pénétrer le fluide dans le passage interne (8) au niveau de la première ouverture (5a) et adapté à faire sortir le fluide du passage interne au niveau de la deuxième ouverture (5b).

14. Outil de démonstration selon l'une quelconque des revendications précédentes, comprenant en outre une base (6) reliée à la première surface d'extrémité (3) du corps (1).

15. Outil de démonstration selon la revendication 14, lorsqu'elle dépend de la revendication 13, le système pour faire progresser le fluide étant intégré à la base (6).

16. Outil de démonstration selon l'une quelconque des revendications précédentes, la plaque de base (23) étant une plaque de base factice d'un appareillage pour stomie.

17. Procédé de démonstration à un utilisateur d'un appareillage pour stomie de l'effet d'une contamination par la mucine d'une stomie d'une plaque de base (23), le procédé comprenant les étapes suivantes :
a. fourniture d'un outil de démonstration (10) selon l'une quelconque des revendications précédentes ;
b. fourniture d'une plaque de base (23), la plaque de base comprenant une couche de support (21) pourvue d'une surface distale et d'une surface proximale et une couche adhésive placée sur la surface proximale de la couche de support (21) ;
c. vérification si le diamètre d'une ouverture de réception de stomie de la plaque de base (23) est à peu près égal ou légèrement supérieur au diamètre de la stomie artificielle pour permettre l'application de la plaque de base autour de la stomie artificielle et, dans le cas contraire, adaptation du diamètre de l'ouverture de réception de stomie pour permettre son application autour de la stomie artificielle ;
d. application de liquide sur le matériau (7) absorbant les liquides afin de former un gel (22) sur la surface périphérique extérieure (2) du corps généralement cylindrique (1) ;
e. engagement de la plaque de base (23) autour de la stomie artificielle par avancement de la plaque de base dans une direction proximale depuis une deuxième partie d'extrémité du corps généralement cylindrique (1) jusqu'à une première partie d'extrémité du corps (1), tandis que le corps passe à travers l'ouverture de réception de stomie de la plaque de base (23) ;
f. retrait de la plaque de base (23) de l'outil de démonstration (10) par inversion de l'étape d'engagement ;
g. inspection d'un motif de répartition de gel sur une surface proximale (25) de la plaque de base (23).

18. Procédé selon la revendication 17, la plaque de base comprenant un revêtement protecteur sur une surface proximale de la couche adhésive.

19. Procédé selon la revendication 18, une surface proximale du revêtement protecteur comprenant un matériau absorbant.

20. Procédé selon l'une quelconque des revendications 17 à 19, les résultats de l'étape d'inspection étant enregistrés dans une base de données.

21. Procédé selon la revendication 20, l'enregistrement des résultats dans la base de données étant réalisé manuellement ou numériquement.

22. Procédé selon l'une quelconque des revendications 20 ou 21, comprenant en outre une étape d'analyse des résultats enregistrés de l'inspection du motif de répartition du gel sur la surface proximale de la plaque de base.

23. Procédé selon la revendication 22, comprenant en outre la recommandation à l'utilisateur d'une ou de plusieurs mesures visant à améliorer l'application de la plaque de base sur la base de l'analyse.

24. Procédé selon la revendication 23, l'étape de recommandation d'une ou de plusieurs mesures comportant la génération des recommandations de mesures par apprentissage machine.
